# EUROPÄISCHE PATENTANMELDUNG

(11) **EP 0 825 005 A1**
(43) Veröffentlichungstag der Anmeldung: **25.02.1998**
(21) Anmeldenummer: 97106225.2
(22) Anmeldetag: 16.04.1997
(51) Int. Cl.: B29C 41/46, B29C 41/18

(54) **Verfahren zum Erwärmen eines Formwerkzeuges**

(30) Priorität: 16.08.1996 DE 19633121
(71) Anmelder: YMOS AKTIENGESELLSCHAFT Industrieprodukte, 63179 Obertshausen (DE)
(72) Erfinder: Christoph, Erich, 63179 Obertshausen (DE)
(74) Vertreter: Podszus, Burghart, Dipl.-Phys., Dipl.-Wirtsch.-Ing.

(57) **Zusammenfassung**

Die Erfindung betrifft ein Verfahren zum Erwärmen eines Formwerkzeuges (5) für die Herstellung von Formkörpern aus Kunststoff, wobei die Erwärmung des Formwerkzeuges (5) durch Kontaktierung mit einem temperierten Wärmeträger (8) erfolgt, der aus einem feinkörnigen Material besteht.

Um zu erreichen, daß die jeweilige Form (5) auf einfache Weise in wesentlich kürzerer Zeit erwärmt werden kann, als dieses mit vergleichbaren bekannten Verfahren möglich ist, schlägt die Erfindung vor, als Wärmeträger (8) Nitrid-Pulver, vorzugsweise Aluminiumnitrid, zu verwenden.

## Beschreibung

Die Erfindung betrifft ein Verfahren zum Erwärmen eines Formwerkzeuges für die Herstellung von Formkörpern aus Kunststoff mit den im Oberbegriff des Anspruchs 1 angegebenen Merkmalen.

Ein derartiges verfahren ist beispielsweise aus der DE-OS 42 04 171 bekannt und wird zum Erwärmen eines Formwerkzeuges für die Herstellung dünnwandiger Kunststoffhäute nach dem Pulver-Sinterverfahren (häufig auch als Slush-Molding- oder Powder-Slush-Verfahren bezeichnet) verwendet. Bei diesem bekannten Verfahren verschließt das Formwerkzeug einen mit dem temperierten Wärmeträger teilweise gefüllten Behälter und wird durch Hin- und Herdrehen des Behälters durch den Kontakt mit dem Wärmeträger erwärmt. Als Wärmeträger wird bei diesem bekannten Verfahren feinkörniges Metallpulver oder Metalloxidpulver, wie Aluminiumoxid bzw. Siliziumoxid, vorgeschlagen.

Aus der FR-PS 2.058.530 ist ebenfalls ein Sinterverfahren zur Herstellung von Kunststoffhäuten bekannt, bei dem die Erwärmung des entsprechenden Formwerkzeuges mit Hilfe erwärmter feinkörniger Glaskugeln erfolgt, welche durch einen an dem Formwerkzeug angeordneten Hohlraum hindurchströmen.

Schließlich ist aus der US-PS 4,946,638 ein Sinterverfahren zur Herstellung von Kunststoffhäuten bekannt, bei dem das Formwerkzeug in einem Wirbelbett erwärmt wird. Als Wärmeträger sollen bei diesem Verfahren feinkörniges Aluminium, Zirkonium oder Glaskugeln verwendet werden.

Von den in den vorstehend genannten Schriften als Wärmeträger vorgeschlagenen unterschiedlichen Materialien hat sich in der Praxis allerdings lediglich Aluminiumoxid bewährt. Aluminium, das aufgrund seiner guten Wärmeleitfähigkeit als besonders geeignet erscheint, weist den Nachteil auf, daß es in Verbindung mit Feuchtigkeit Wasserstoff erzeugt (Knallgas). Bei Verwendung anderer Metalle als Wärmeträger, wie z.B. Kupfer, muß die jeweilige Erwärmungsstation aufwendig ausgebildet sein, weil aufgrund der relativ hohen Dichte dieser Metalle beim Drehen und Schwenken der Erwärmungsstation erhebliche dynamische Kräfte auftreten.

Aluminiumoxid hingegen ist ungefährlich und gut rieselfähig, besitzt aber eine relativ schlechte Wärmeleitfähigkeit, so daß entweder relativ lange Erwärmungszeiten des Formwerkzeuges oder zwecks Verkürzung der Erwärmungszeiten relativ hohe Temperaturdifferenzen zwischen Wärmeträger und Formwerkzeug erforderlich sind. Bei Verwendung hoher Temperaturdifferenzen wird das Formwerkzeug hingegen ungleichmäßig erwärmt, so daß die mit diesem Formwerkzeug gefertigten Kunststoffhäute häufig eine mangelhafte Qualität aufweisen.

In der DE-PS 195 32 285 wird daher vorgeschlagen, derartige ungleichmäßig erwärmte Formwerkzeuge in einer zweiten Erwärmungsstation so lange auf der entsprechenden Solltemperatur zu halten, bis die Temperaturunterschiede innerhalb der Form weitgehend abgebaut sind.

Nachteilig ist bei einer derartigen zweistufigen Erwärmung u.a., daß die entsprechenden Vorrichtungen technisch sehr aufwendig und mit relativ hohen Kosten verbunden sind sowie sehr lange Zeiten zum Temperaturausgleich benötigen.

Der Erfindung liegt die Aufgabe zugrunde, ein Verfahren der eingangs erwähnten Art anzugeben, mit dem das jeweilige Formwerkzeug auf einfache Weise in wesentlich kürzerer Zeit erwärmt werden kann, als dieses mit vergleichbaren bekannten Verfahren möglich ist.

Diese Aufgabe wird erfindungsgemäß durch die Merkmale des kennzeichnenden Teils des Anspruchs 1 gelöst. Eine vorteilhafte Ausgestaltung der Erfindung offenbart der Unteranspruch.

Die Erfindung beruht im wesentlichen auf dem Gedanken, als Wärmeträger nicht die bisher bekannten Materialien (z.B. Aluminiumoxid) zu verwenden, sondern Nitride, insbesondere Aluminiumnitrid.

Wie Untersuchungen gezeigt haben, weist Aluminiumnitrid einerseits eine Fluidisierbarkeit auf, die derjenigen von Aluminiumoxid entspricht. Andererseits besitzt Aluminiumnitrid aber eine etwa 10 mal höhere Wärmeleitfähigkeit als Aluminiumoxid, so daß sich Erwärmungszeiten des Formwerkzeuges ergeben, die bis zu 10 mal kürzer sind, als bei der Verwendung von Aluminiumoxid.

Daher werden mit dem erfindungsgemäßen Verfahren im Vergleich zu bekannten Verfahren bei gleichem technischen Aufwand und vorgegebener Temperaturstreuung in dem jeweiligen Formwerkzeug wesentlich kürzere Erwärmungszeiten und damit Taktzeiten erreicht. Werden hingegen die Erwärmungszeiten gleich gewählt wie bei bekannten Verfahren, so ergeben sich wesentlich geringere Temperaturstreuungen in dem Formwerkzeug. Bei Verwendung von Nitriden als Wärmeträger kann daher -im Gegensatz zu der DE-PS 195 32 285- auf eine zweistufige Erwärmung verzichtet und der technische Aufwand somit erheblich vermindert werden.

Da Aluminiumnitrid (ähnlich wie Aluminiumoxid) außerdem ein sehr hohes elektrisches Isolationsvermögen besitzt, kann das Aufheizen des Wärmeträgers ohne besondere Schutzmaßnahmen durch eine entsprechende elektrische Heizung erfolgen.

Weitere Einzelheiten und Vorteile der Erfindung ergeben sich aus dem folgenden Ausführungsbeispiel, welches anhand einer Fig. erläutert wird.

In der Fig. ist mit 1 der Schnitt einer schematisch dargestellten Erwärmungsstation bezeichnet, die um eine Achse 2 drehbar gelagert ist. Die Erwärmungsstation 1 besteht im wesentlichen aus einem Behälter 3 mit einer oberen Öffnung 4. Die obere Öffnung 4 ist durch ein zu erwärmendes Formwerkzeug 5 zur Herstellung entsprechend geformter Kunststoffteile verschlossen, und zwar derart, daß die Rückseite 6 der Form 5 dem Innenraum 7 des Behälters 3 zugewandt ist.

Der Innenraum 7 des Behälters 3 ist teilweise mit einem Wärmeträger 8 gefüllt, bei dem es sich erfindungsgemäß um Aluminiumnitrid-Teilchen mit einer Korngröße zwischen 0,1 und 0,4 mm, vorzugsweise zwischen 0,3 und 0,4 mm, handelt.

Zur Erwärmung des Wärmeträgers 8 befindet sich innerhalb des Wärmeträgers eine aus einzelnen Heizelementen 9 bestehende elektrische Heizung 10.

Soll das Formwerkzeug 5 erwärmt werden, wird der Behälter derart hin- und hergedreht bzw. hin- und hergeschwenkt, daß der Wärmeträger 8 die Rückseite 6 des Formwerkzeuges 5 berührt und aufgrund der hohen Wärmeleitfähigkeit des Aluminiumnitrids schnell auf die gewünschte Temperatur erwärmt. Die Erwärmung der Wärmeträger 8 mit Hilfe der elektrischen Heizung 10 (z.B. auf die vorgegebene Temperatur von 240°C) geschieht gleichzeitig mit der Erwärmung des Formwerkzeuges 5. Anschließend kann dann das Kunststoffpulver in die Öffnung 11 des Formwerkzeuges 5 eingebracht und das entsprechende Kunststoffteil in an sich bekannter Weise hergestellt werden.

Das erfindungsgemäße Verfahren ist selbstverständlich nicht auf das vorstehend beschriebene Ausführungsbeispiel beschränkt. So kann die Erwärmung des Formwerkzeuges beispielsweise auch mit Hilfe eines Wirbelbettes erfolgen, wobei auch in diesem Fall Nitrid-Pulver als Wärmeträger dient.

### Bezugszeichenliste

- 1: Erwärmungsstation
- 2: Achse
- 3: Behälter
- 4: Öffnung (Behälter)
- 5: Formwerkzeug
- 6: Rückseite (Formwerkzeug)
- 7: Innenraum
- 8: Wärmeträger
- 9: Heizelement
- 10: elektrische Heizung
- 11: Öffnung (Formwerkzeug)

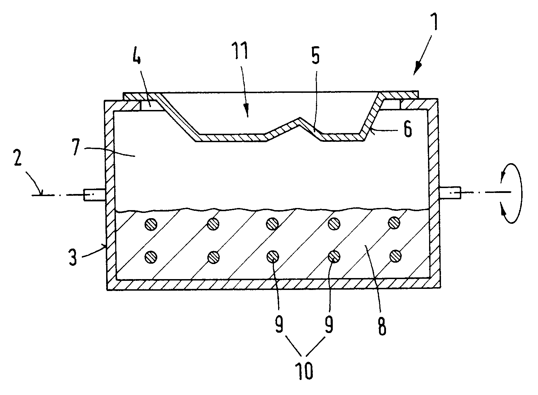

## Patentansprüche

1. Verfahren zum Erwärmen eines Formwerkzeuges (5) für die Herstellung von Formkörpern aus Kunststoff, wobei die Erwärmung des Formwerkzeuges (5) durch Kontaktierung mit einem temperierten Wärmeträger (8) erfolgt, der aus einem feinkörnigen Material besteht, **dadurch gekennzeichnet**, daß als Wärmeträger (8) Nitrid-Pulver verwendet wird.

2. Verfahren nach Anspruch 1, **dadurch gekennzeichnet**, daß als Wärmeträger (8) Aluminiumnitrid-Teilchen verwendet werden.

3. Verfahren nach Anspruch 2, **dadurch gekennzeichnet**, daß als Wärmeträger (8) Aluminiumnitrid-Teilchen mit einer Korngröße zwischen 0,1 und 0,4 mm verwendet werden.

4. Verfahren nach Anspruch 3, **dadurch gekennzeichnet**, daß als Wärmeträger (8) Aluminiumnitrid-Teilchen mit einer Korngröße zwischen 0,3 und 0,4 mm verwendet werden.
